# EUROPÄISCHE PATENTSCHRIFT

(11) **EP 1 171 319 B1**
(45) Veröffentlichungstag und Bekanntmachung des Hinweises auf die Patenterteilung: **26.03.2003**
(21) Anmeldenummer: 00922603.6
(22) Anmeldetag: 04.04.2000
(51) Int. Cl.: B44F 1/10, B65D 65/40, G03H 1/02, B41M 3/14, B42D 15/00

(54) **DEKORATIONSFOLIE**
DECORATIVE FOIL
FILM DECORATIF

(30) Priorität: 09.04.1999 DE 19915943
(43) Veröffentlichungstag der Anmeldung: 16.01.2002
(73) Patentinhaber: OVD Kinegram AG, 6301 Zug (CH)
(72) Erfinder: TOMPKIN, Wayne, Robert, CH-5400 Baden (CH); STAUB, René, CH-6330 Cham (CH)
(74) Vertreter: LOUIS, PÖHLAU, LOHRENTZ & SEGETH
(86) Internationale Anmeldenummer: EP0002986
(87) Internationale Veröffentlichungsnummer: WO00061386

(56) Entgegenhaltungen:
- EP-A- 0 123 163
- EP-A- 0 883 085
- WO-A-97/04339
- WO-A-99/10163
- DE-U- 29 700 289
- FR-A- 2 697 808
- PATENT ABSTRACTS OF JAPAN vol. 013, no. 057 (P-825), 9. Februar 1989 (1989-02-09) & JP 63 247784 A (TOPPAN PRINTING CO LTD), 14. Oktober 1988 (1988-10-14)

## Beschreibung

Die Erfindung bezieht sich auf eine Dekorationsfolie gemäss dem Oberbegriff des Anspruchs 1.

Solche Dekorationsfolien weisen eine spiegelgleiche reflektierende Oberfläche auf und werden zum dekorativen Verpacken von Produkten und/oder zum Sichern der Produkte vor Raubkopien verwendet, wenn aus ästhetischen Gründen oder Kostengründen keine Sicherheitselemente, wie bunte Hologramme, Mosaiks mit Beugungsgittern usw., zum Einsatz kommen.

Eine Dekorationsfolie der eingangs genannten Art ist aus der WO 82/03202 bekannt. Ein Papierträger ist einseitig plastifiziert, um die eine Oberfläche zu glätten. Anschliessend wird die glatte Oberfläche durch Aufdampfen von Aluminium metallisiert, dass die Kunststoffschicht zwischen der Metallschicht und dem Papier eingeschlossen ist. Diese Dekorationsfolie lässt sich wie Papier verarbeiten, weist auf der einen Aussenseite ein metallisches Aussehen auf. Die metallische Aussenseite kann zusätzlich bedruckt werden.

In der EP 0 209 362 A2 ist eine Dekorationsfolie beschrieben, bei der zunächst die Metallschicht auf beiden Seiten einer Kunststofffolie aufgebracht wird, wobei die eine Seite eine spiegelglatte und die andere Seite eine matte Oberfläche aufweist. Die hochglänzende oder die matte Oberfläche der Kunststofffolie wird auf Papier laminiert. Ein zusätzlicher, über die freie Metallschicht aufgebrachter Lacküberzug bewirkt eine erhöhte Abriebfestigkeit der Metallschicht. Die Dekorationsfolie lässt sich wie Papier verarbeiten und auf der Metallseite bedrucken.

Es ist auch bekannt, Dokumente, wie Wertpapiere Billette, Banknoten usw. mit Streifen oder Rhomben einer metallisierten Heissprägefolie zu versehen, um eine Photokopie des Dokuments anhand der Unterbelichtung im Bereich der metallisierten Heissprägefolie eindeutig als Kopie erkennen zu können.

Diese Deckorationsfolien mit Spiegelglanz sind im Handel leicht erhältlich und tragen kein auf den Hersteller des Produkts hinweisendes Merkmal.

Weiter sind in der EP 0 132 668 B1 mit Metallfolie kaschierte oder mit feinsten Metallflocken überzogene Papiere, die auch eine Prägung aufweisen können, erwähnt. Wegen ihrer Eignung, mit hoher Geschwindigkeit geschnitten und gefaltet zu werden, werden solche metallisierten Papiere z.B. in der Zigarettenindustrie als Verpackungsmaterial verwendet.

Auf Banknoten oder Pässen werden, wie beispielsweise aus der DD 228'669 A5 bekannt, mittels Intagliodruck Reliefstrukturen in Farbe oder metallischer Paste auf das Substrat aufgebracht. Nur unter einer vorbestimmten Betrachtungsbedingung ist ein durch die Reliefstrukturen erzeugtes latentes Bild erkennbar. Die US-PS 5'772 248 lehrt, ein solches von blossem Auge sichtbares, latentes Bild in eine Folie zu prägen.

Der Erfindung liegt die Aufgabe zugrunde, eine hochwertige, kostengünstige Dekorationsfolie zu schaffen, die eine spiegelgleiche reflektierende Eigenschaft und schwer nachzuahmende unauffällige Echtheitsmerkmale aufweist.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Die Dekorationsfolie bestecht aus wenigstens zwei Schichten, eine einseitig mit einer Reflexionsschicht beschichteten Basisfolie. Die Reflexionsschicht ist jedoch mit Vorteil zwischen der Basisfolie und einer Schutzschicht angeordnet. Eine der Reflexionsschicht zugewandte Abformfläche der Basisfolie weist eine durch Abformen erhaltene Struktur von Gruppen geometrischer Formen auf. Eine von der Gruppe eingenommene Fläche weist eine Breite von 30 µm bis 300 µm auf. In der Basisfolie abgeformte Elemente der Gruppe besitzen einen im wesentlichen rechteckig geformten Querschnitt, wobei sich die von der Gruppe eingenommene Fläche aus Elementflächen, die in einer Parallelebene zur Abformfläche liegen, und aus Restflächen in der Ebene der Abformfläche zusammensetzt. Die von den Gruppen eingenommenen Flächen sind durch Bereiche eines Hintergrundfelds in der Ebene der Abformfläche getrennt.

Ausführungsbeispiele der Erfindung sind in der Zeichnung dargestellt und werden im folgenden näher beschrieben.

Es zeigen:
- Figur 1: eine Matrize und zwei Ausführungen einer Dekorationsfolie im Schnitt,
- Figur 2: ein Laminat,
- Figur 3: Matrizenausschnitt mit Strukturen geometrischer Formen,
- Figur 4: eine andere Ausführung der Dekorationsfolie im Schnitt
- Figur 5: eine Gruppe von geometrischen Formen,
- Figur 6: eine regelmässige Anordnung der Gruppen,
- Figur 7: ein Muster bandförmiger Streifen mit den Gruppen,
- Figur 8: die Dekorationsfolie mit Indicia und
- Figur 9: ein beleuchtetes Kinoform.

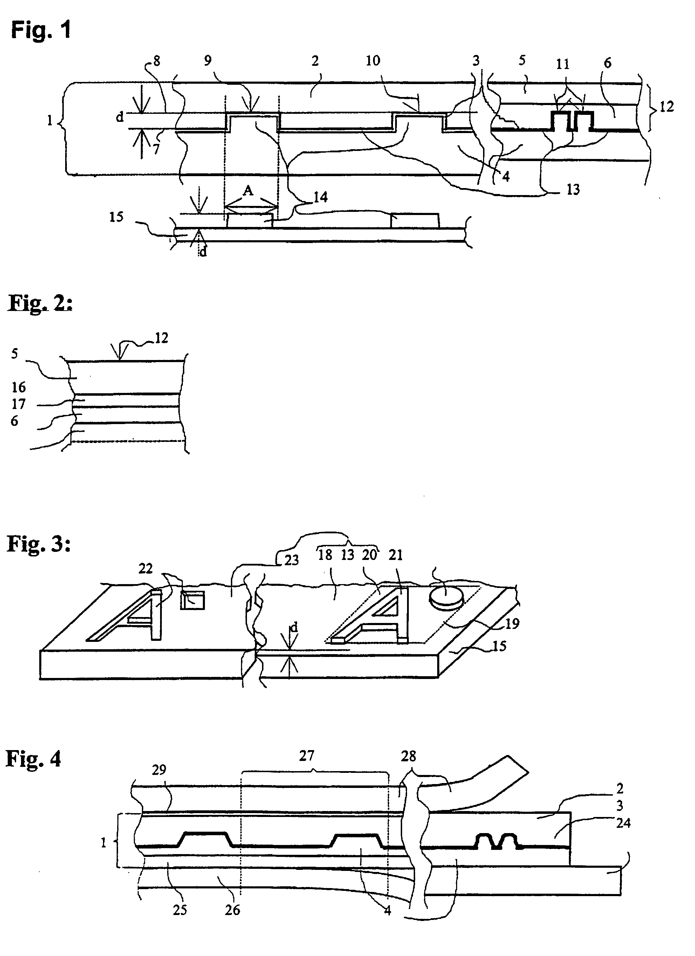

In der Figur 1 bedeutet 1 eine Dekorationsfolie, 2 eine Basisfolie, 3 eine Reflexionsschicht, 4 eine Schutzschicht, 5 eine Basisschicht, 6 eine Abformschicht, 7 eine Abformfläche der Basisfolie 2 und 8 eine Parallelebene zur Abformfläche 7 und 9 bis 11 Elementflächen, die in der Parallelebene 8 liegen. Auf der Abformfläche 7 ist die Reflexionsschicht 3 aufgebracht. Die beiden in der Figur 1 gezeigten Ausführungen der Dekorationsfolie 1 unterscheiden sich in der Basisfolie 2; die Ausführung, links, ist mit einer massiven Basisfolie 2 ausgerüstet, während dem bei der Ausführung, rechts, die Basisfolie 2 ein Laminat 12 ist, das aus der Basisschicht 5, der Abformschicht 6 und allfälligen, hier nicht gezeigten, Schichten zwischen der Basisschicht 5 und der Abformschicht 6 gebildet ist. Die Reflexionschicht 3 ist in der Figur 1 nur in der Zeichnung, links, als "Schicht" mit einer Doppellinie gezeigt, in der Zeichnung rechts und im folgenden nur noch als fette Linie. Die Abformfläche 7 der Basisfolie 2 ist durch Abformen von Elementen 14 einer Matrize 15 so strukturiert, dass durch die Elemente 14 lokal Teile der Reflexionsschicht 3 mit der Abformfläche 7 als Elementflächen 9 bis 11 um eine praktisch gleiche Distanz d in die Parallelebene 8 versetzt sind. Die durch das Abformen der Elemente 14 in die Basisfolie 2 (bzw. in das Laminat 12) erzeugte Struktur weist Vertiefungen z.B. mit einem im wesentlichen rechteckigen Querschnitt auf. In einer ersten Ausführung sind die mit der Reflexionsschicht 3 in Berührung kommenden Flächen der Matrize 15 poliert. Die Abmessungen A der Elementflächen 9 bis 11 betragen zwischen 250 nm bis 300 µm, d.h. es sind Abformungen mit einer Auflösung von 4'000 Punkten/mm oder 100'000 dpi. erzeugbar. Das Merkmal der Dekorationsfolie 1 sind Erhebungen in der Form von Zylindern, Prismen, Kegel-, Pyramidenstümpfen usw. mit den Elementflächen 9 bis 11 als Deckflächen. Die Elementflächen 9 bis 11 haben als Begrenzung die Konturen von geometrischen Formen, wie Buchstaben, Ziffern, graphische Zeichen, Logos usw., und sind als Erhebungen über der Abformfläche 7 erzeugt, z.B. in der Form eines Textes.

Die Bruchteile eines Mikrometers dicke, strukturierte Reflexionsschicht 3 ist vorzugsweise mit der Schutzschicht 4 überzogen, damit die Reflexionsschicht 3 zwischen der Basisfolie 2 und der Schutzschicht 4 angeordnet und vor äusseren Einfüssen geschützt ist. Die Reflexionsschicht 3 ist durch die Basisfolie 2 und/oder durch die Schutzschicht 4 hindurch sichtbar. Sie erscheint als metallisch glänzende, spiegelnde Fläche, wenn das Material der Reflexionsschicht 3 ein Metall (Al, Ag, Au, Cr, Cu, Fe, Ni, Pd, Ti usw.) ist. Besteht hingegen die Reflexionsschicht 3 aus einem transparenten Dielektrikum (TiO₂, ZnS, ZnO, Nd₂O₃ usw.) mit einem Brechungsindex grösser als 1, 8 für Licht im sichtbaren Bereich, ist die Dekorationsfolie 1 im allgemeinen transparent, falls die Basisfolie 2 und die Schutzschicht 4 transparent sind.

Teilflächen der Dekorationsfolie 1 jedoch, bei denen das auf die Teilflächen einfallende Licht und die Betrachtungsrichtung gerade die Reflexionsbedingung erfüllen, glänzen wie ein Spiegel; dies erzeugt eine besonders dekorative Wirkung. Die in die Reflexionsschicht 3 abgeformte Struktur ist nur mit Hilfe einer starken Lupe in den Einzelheiten zu erkennen. Sowohl die Elementflächen 9 bis 11 als auch Restflächen 13 zwischen den in der Höhe versetzten Elementflächen 9 bis 11 erscheinen dem Betrachter gleichmässig hell, jedoch erfüllen reflektierende Seitenflächen der Strukturen nicht dieselbe Betrachtungsbedingungen wie die Elementflächen 9 bis 11 und die Restflächen 13 und erscheinen deshalb in einem anderen Helligkeitswert als die Elementflächen 9 bis 11 und die Restflächen 13. An den Kanten der Elementflächen 9 bis 11 treten zudem Streueffekte auf, so dass sich die Konturen der Elementflächen 9 bis 11 gegenüber den Elementflächen 9 bis 11 und der Restflächen 13 so deutlich abheben, dass eine durch die Struktur eingebrachte Information (Text, Graphik, Emblem, Warenzeichen usw.) zu erkennen ist.

Die Verpackung mit der Dekorationsfolie 1 ist für eingesiegelte, teuere bzw. hochwertige Produkte von Vorteil, da die Struktur in der für die Verpackung benutzten Dekorationsfolie 1 einen Hinweis auf die Echtheit des Originalprodukts abgibt, eine Untersuchung, die jederzeit und überall durchgeführt werden kann, ohne das Siegel zu brechen. Für den Käufer bzw. den Verkäufer vermindert diese Verpackung das Risiko, unwissentlich eine Raubkopie zu erwerben bzw. anzubieten. Der geringe Mehraufwand für die Verpackung schützt zudem den Hersteller der Originalprodukte vor finanziellem Schaden durch Raubkopien.

Die Basisfolie 2 ist entweder eine massive thermoplastische Folie oder ein Laminat 12 aus wenigstens zwei Schichten, z.B. der Basisschicht 5 und eine mit der Basisschicht 5 fest verbundene thermoplastische Abformschicht 6. Die Basisschicht 5 besteht beispielsweise aus einer thermoplastische Folie oder einem Papier. Die Abformschicht 6 wird als Lack auf die Basisschicht 5 aufgetragen oder als thermoplastische Folie auf die Basisschicht 5 aufkaschiert. Zwischen der Basisschicht 5 und der Abformschicht 6 können Haftvermittler - ("Primer -") Schichten vorhanden sein, um ein Aufsplittern des Laminats 12 zu verhindern. Die Basisfolie 2 ist vorzugsweise transparent, wenn die Basisfolie 2 die Aussenseite der Dekorationsfolie 1 bildet, wobei sie farblos ("glasklar") oder eingefärbt sein kann. Ist die Schutzschicht 4 transparent und bildet sie die Aussenseite der Dekorationsfolie 1, kann die Basisfolie 2 opak oder völlig undurchsichtig sein.

In der Figur 2 ist das aus der eingangs erwähnten WO 82/03202 bekannte Laminat 12 gezeigt, das ein Papier als Basisschicht 5 aufweist. Die Basisschicht 5 besteht aus Karton oder Papier, im folgenden als "Papier" bezeichnet, auf die einseitig allfällige haftvermittelnde Zwischenschichten 16 und eine Polymerschicht 17 ( Polyolefine, Polyester, PVC usw.) in der angegebenen Reihenfolge aufgebracht sind. Die Polymerschicht 17 ist direkt anstelle der Abformschicht 6 zum Abformen der Matrize 15 (Figur 1) benutzbar. In einer anderen Ausführung kann zusätzlich auf die Polymerschicht 17 die in der Figur 2 gestrichelt gezeichnete Abformschicht 6 auf die Polymerschicht 17 aufgebracht werden. Die auf dem Laminat 12 mit der Basisschicht 5 aus Papier basierende Dekorationsfolien 1 finden vorwiegend in der Verpackungsindustrie Verwendung, da diese spezielle Dekorationsfolie 1 den Vorteil aufweist, dass sie wie Papier, d.h. mit hoher Geschwindigkeit, verarbeitet werden kann. Ist das Papier in Kartonqualität kann die Dekorationsfolie 1 z.B. für die Herstellung von dekorativen Schachteln verwendet werden. Die Dekorationsfolie 1 mit einem dünnen Papier (Quadratmetergewichte im Bereich von 17 g/m² bis 80 g/m²) dient z.B. als dekorative Ausfütterung einer Schachtel usw.

Die thermoplastische Folie für die Basisfolie 2 (Figur 1) bzw. für die Basisschicht 5 besteht mit Vorteil aus Polyester (Polyethylenterephthalat (PETP) oder Polycarbonat (PC)) oder Polyolefin (Polyethylen (PE), Polypropylen (PP) usw.) oder einem andern für Folienerzeugung geeigneten Kunststoff. Besonders die Polyesterfolien sind ohne Einfärbung glasklar und auch in dünnen Stärken von hoher Zugfestigkeit, wie sie für Verpackungsmaterial gefordert wird. Eine Einfärbung des Kunststoffes bewirkt eine Teiltransparenz der Folie für einen beschränkten Teil des sichtbaren Spektrums; sie ist einer dekorativer (z.B. roter) Farbe durchsichtig. Entsprechend der Verwendung der Dekorationsfolie 1 weist die Dicke der thermoplastischen Folie einen Wert im Bereich zwischen einigen Mikrometern und einigen Millimetern, vorzugsweise jedoch zwischen 5 µm und 100 µm, auf.

Die allfällige Abformschicht 6 wird gewöhnlich als Lack aufgetragen. Bewährt haben sich transparente Lacke auf Nitrocellulose - und/oder Acrylatbasis (z.B. Polymethylmethacrylat, PMMA) oder einer der UV - härtenden Lacke. Jedoch kann die Abformschicht 6 auch als dünne Folie aus Polyvinylchlorid (PVC), PETP, PC, PE oder PP auf die Basisschicht 5 aufdoubliert werden. Die Dicke der unverformten Abformschicht 6 erreicht wenigstens die Distanz d, vorzugsweise ist die Abformschicht 6 um einige Mikrometer dicker aufgetragen, damit die Struktur völlig in der Abformschicht 6 enthalten ist.

Gemäss der EP 0 386 316 A1 werden Reliefstrukturen in eine bandförmige Folie zwischen einer Matrizenwalze und der Gegendruckwalze im Durchlaufverfahren abgeformt. Auf der Matrizenwalze ist eine Matrizenhülse aufgezogen, die auf ihrer äusseren Mantelfläche ein Negativ der abzuformenden Struktur aufweist. Die Figur 3 zeigt einen Ausschnitt aus der Mantelfläche, die Matrize 15, der Matrizenhülse. Die Mantelfläche weist Oberflächenstrukturen auf, die aus den in z.B. regelmässig angeordneten Gruppierungen der Elemente 14 (Figur 1) bestehen. Zwischen den Gruppierungen sind von den Elementen 14 freie Felder 18 angeordnet. Die Mantelfläche setzt sich somit aus den von den Feldern 18 eingenommenen Flächen des Hintergrunds und Gruppenflächen 19 zusammen, wobei die Gruppenfläche 19 aus den Restflächen 13 und Stempelflächen 20 bis 22 der Elemente 14 gebildet ist. Die Flächen der Felder 18 und die Restflächen 13 bilden die Matrizenfläche 23, die die Ebene der Abformfläche 7 bestimmt. Die Stempelflächen 20 bis 22 bilden zusammen einen Flächenanteil der mit weniger als 20% der Mantelfläche kleiner ist als der Flächenanteil der Matrizenfläche 23 an der Mantelfläche. Die Oberflächenstrukturen der Matrize 15 können erhaben oder vertieft sein; beispielsweise zeigt die Ausführung, rechts, erhabene Stempelflächen 20 und 21 über der Matrizenfläche 23, während in der Ausführung, links, die Stempelflächen 22 Vertiefungen in der Matrizenfläche 23 sind. Die Stempelflächen 20 und 21 sind beispielsweise um die eine Distanz d und die Stempelflächen 22 um eine andere Distanz d gegenüber der Matrizenfläche 23 versetzt und erzeugen durch das Abformen der Elemente 14 in die Basisfolie 2 (Figur 1) bzw. in das Laminat 12 (Figur 2) Vertiefungen mit einem im wesentlichen rechteckigen Querschnitt. Mit dem Vorteil eines besseren Ausformens verjüngen sich die Elemente zu den Stempelflächen 20 bis 22 hin etwas, so dass die Vertiefungen einen trapezförmigen Querschnitt aufweist. Die Elementflächen 9 (Figur 1) bis 11 (Figur 1) und die Restflächen 13 (Figur 1) weisen nach der Abformung in die Basisfolie 2 die Feinstrukturen der Stempelflächen 20 bis 22 bzw. der Matrizenfläche 23 auf.

Ein verbreitetes Verfahren zum Abformen der Strukturen der Matrize 15 in die thermoplastische Folie ist das Prägen mit der beheizten Matrize 15. Die Matrize 15 erwärmt die Oberfläche der thermoplastische Folie derart, dass die Elemente 14 in die Folienoberfläche eindringen und die Elementflächen 9 bis 11 der Elemente 14 in die Parallelebene 8 (Figur 1) um die Distanz d verschieben. Die Distanz d weist einen Wert im Bereich von 0,05 µm bis 10 µm auf. Bevorzugte Werte für d liegen zwischen 0,1 µm bis 2 µm. Ein anderes Verfahren formt die Struktur der Matrize 15 in die Oberfläche eines aushärtenden Lacks ab, der mittels UV - Strahlung zum Aushärten veranlasst wurde. Bei diesem Verfahren wird die Reflexionsschicht 3 (Figur 1) nach dem Abformen der Struktur der Matrize 15 aufgebracht.

Wie die Figur 4 zeigt, überzieht die Schutzschicht 4 die strukturierte Reflexionsschicht 3. Die Schutzschicht 4 wird als leicht fliessender Lack auf Nitrocellulose - und/oder Acrylatbasis in einer oder mehreren Schichten aufgetragen. Die Vertiefungen in der Basisfolie 2 sind völlig ausgefüllt und ausgeebnet. Die Schichtdicke, gemessen über der Ebene der Abformfläche 7, weist einen Wert im Bereich von 0,5 µm bis zu 10 µm auf. Die abgeformten Strukturen sind mit der Schutzschicht 4 völlig bedeckt, um den direkten Zugriff auf die jetzt strukturierte Abformfläche 7 zu verhindern. Soll die Schutzschicht 4 über der Reflexionsschicht 3 besonders kratzfest sein, ist die Verwendung eines der mittels ultravioletter Strahlung aushärtenden Lacken empfohlen, die zum Schutz von stark beanspruchten Flächen bei Kredit -, Ausweis -, IC - Karten usw. verwendet werden.

In der Ausführung, links, der Figur 4 weisen die in die Basisfolie 2 abgeformte Struktur Vertiefungen mit einem trapezförmigen Querschnitt auf. Die Betrachtungsbedingung einer solchen Struktur ist weniger eingeschränkt als die bei Strukturen mit rechteckförmigem Querschnitt. Bei sehr feinen Strukturen, z.B. einer Doppellinie in der Ausführung, rechts, können die rechteckförmigen Querschnitte nicht sauber abgeformt sein und können im Querschnitt abgerundete Kanten aufweisen.

Falls die Dekorationsfolie 1 mit einem Substrat 24 verbunden werden soll, ist die Schutzschicht 4 zum Verbinden mit dem Substrat 24 eingerichtet, entweder ist auf die von der Reflexionsschicht 3 abgewandten Oberfläche der Schutzschicht 4 eine zusätzliche Klebeschicht 25 (Ausführung, links) aufgetragen oder das Material der Schutzschicht 4 (Ausführung, rechts) eignet sich selbst zum Verbinden mit dem Substrat 24. Bekannt für diese Verwendung sind sowohl Kaltkleber, z.B. auf Gummibasis, als auch Heisskleber. Die letzteren entwickeln ihre Klebeeigenschaften erst bei erhöhter Temperatur, z.B. ein Heisskleber auf der Basis von Polymethylmethacrylat ab etwa 110°C. Die Dicke der Klebeschicht 25 bzw. der klebefähigen Schutzschicht 4 ist von der Oberflächenrauhigkeit des Substrats 24 und der Art des Klebematerials abhängig. Der Kaltkleber weist eine Dicke von etwa 10 µm für eine glatte bis 30 µm für eine rauhe Oberfläche des Substrats 24 auf. Für die Dicke des Heissklebermaterials genügen etwa 1 µm für eine glatte bis 10 µm für eine rauhe Oberfläche des Substrats 24. Die Klebeschicht 25 bzw. die klebefähige Schutzschicht 4 auf der Basis eines Kaltklebers ist mit einer leicht zu entfernenden Schutzfolie 26 aus Polyester oder silikonisiertem Papier abgedeckt, um ein ungewolltes Kleben der Dekorationsfolie 1 zu vermeiden.

Vor dem Applizieren der Dekorationsfolie 1 auf das Substrat 24 wird die Schutzfolie 26 abgezogen.

Die Dekorationsfolie 1 kann in schmale Streifen oder Marken 27 von einigen Quadratzentimetem geschnitten werden, wie dies in der Zeichnung der Figur 4 durch unterbrochene Linien angedeutet ist. Ein Transferband 28 erleichtert eine Applikation der Marken 27 und ist auf der von der Reflexionsschicht 3 abgewandten Seite der Basisfolie 2 angeordnet. Die Verbindung des Transferbands 28 mit der Basisfolie 2 erfolgt über eine Trennschicht 29, z.B. aus einem Wachs, und lässt sich nach dem Aufkleben der Marke 27 auf das Substrat 24 leicht entfernen. Die Herstellung der Dekorationsfolien 1 geht von der mit dem Transferband 28 verbundenen Basisfolie 2 aus. Nach dem Aufbringen der letzten Schicht, d.h. der Klebeschicht 25 bzw. der klebefähigen Schutzschicht 4 oder der Schutzfolie 26, werden die Marken 27 aus der Dekorationsfolie 1 von der letzten Schicht her gegen das Transferband 28 gestanzt, ohne dieses zu durchschneiden ("kiss - cut"). Nach dem Aufkleben der Marke 27 auf das Substrat 24 wird das Transferband 28 abgezogen (Figur 4, Zeichnung, rechts). Dokumente, Banknoten, Ausweise aller Art usw. erhalten mittels einer derartigen Marke 27 einen einfachen Schutz gegen das Photokopieren und gleichzeitig bildet die Struktur in der Dekorationsfolie 1 ein leicht zu überprüfendes Merkmal der Marke 27.

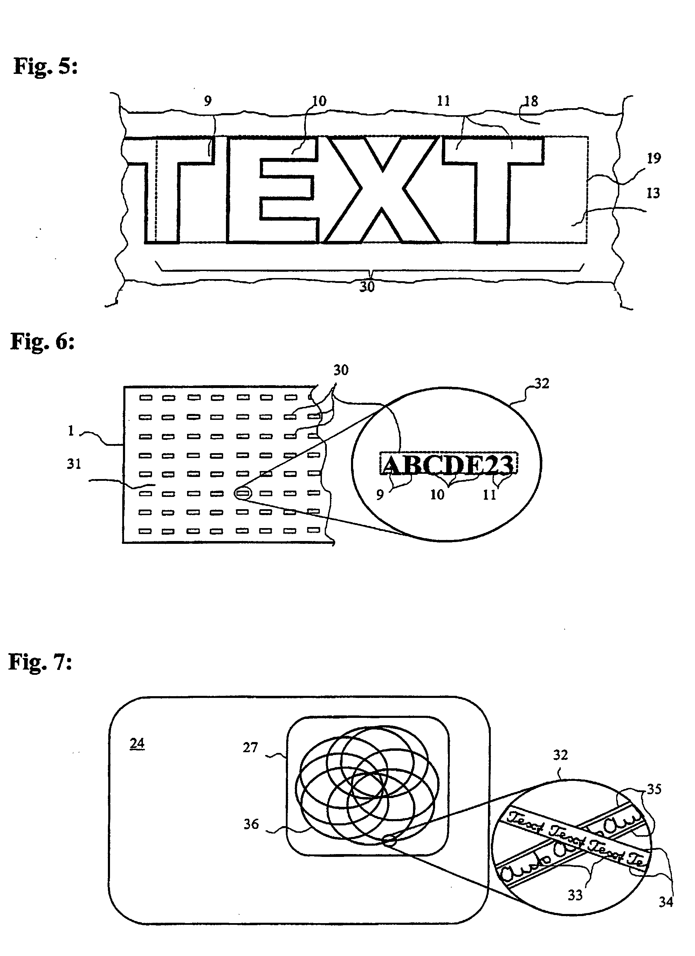

Die Figur 5 zeigt in Aufsicht einen Ausschnitt der Dekorationsfolie 1 mit einer Gruppe 30 von den Elementflächen 9 bis 11 und den Restflächen 13 innerhalb der Gruppenfläche 19. Die Gruppenfläche 19 ist ein zur Beschreibung verwendetes, fiktives Rechteck, das mit jeder Seite wenigstens eine der Elementflächen 9 bis 11 berührt. Die Gruppenfläche 19 ist von den Feldern 18 umgeben, die die Gruppen 30 voneinander trennen. Die Elementflächen 9 bis 11 einer Gruppe 30 liegen in der Parallelebene 8 (Figur 1) und sind von der Abformebene 7 (Figur 1) um die der Gruppe zugeordnete Distanz d verschoben. Bei Lichteinfall treten an den Kanten der Elementflächen 9 bis 11 durch Streueffekte auf, so dass die Konturen der Elementflächen 9 bis 11 mit der Vergrösserungseinrichtung als Kontrastunterschied zur Umgebung erkennbar sind. Sind die Elementflächen 9 bis 11, die Restflächen 13 und die Felder 18 spiegelnd, entsprechen in der Darstellung der Figur 5 die schwarz ausgezogenen Ränder der Buchstaben den durch Kontrastunterschiede hervorgehobenen Konturen . Die Erkennbarkeit der Elementflächen 9 bis 11 wird durch die Wahl des in der Figur 4 dargestellten, trapezförmigen Querschnitts der Strukturen oder mittels die Strukturen begrenzenden Doppelkanten erhöht. Von blossem Auge ist die Dekorationsfolie 1 metallisch glänzend und von einer nicht strukturierten, metallisierten Folie nicht zu unterscheiden. Die Abmessungen der in der Zeichnung der Figur 5 als Beispiel dargestellte Gruppenfläche 19 betragen etwa 340 µm in der Länge und 75 µm in der Breite, wobei die Strichbreite für die Elementflächen 9 bis 11 zu 15 µm angenommen wurde. Damit die Information "TEXT" gut lesbar ist, sind die Abmessungen der Gruppenfläche 19 unter Berücksichtigung der zum Kontrollieren der Dekorationsfolie 1 vorgeschriebenen Vergrösserungseinrichtung mit entsprechend zu wählen, wobei die vorbestimmte Vergrösserung wenigstens 10 betragen soll. Da der Betrachtungsabstand beim Gebrauch eines Vergrösserungsglases kleiner ist als die üblichen 30 cm, ist sogenannte "Mikromarkierung" mit Buchstaben, Zeichen usw. von 30 µm bis 300 µm Höhe gut erkennbar.

In der Figur 6 ist ein Abschnitt der Dekorationsfolie 1 dargestellt. Auf der ganzen Fläche der Dekorationsfolie 1 sind in regelmässigen Abständen die Gruppen 30 angeordnet und durch Bereiche von von den Gruppen 30 nicht eingenommenen Flächen, einem Hintergrundfeld 31, getrennt. Eine der Gruppen 30 ist durch eine Lupe 32 gesehen gezeichnet. In der starken Vergrösserung sind die Konturen der Elementflächen 9 bis 11 sichtbar. Die Dichte der Gruppen 30 auf der Dekorationsfolie 1 hängt von der Anwendung und der Länge der Gruppe 30 ab. Der Anteil der Elementflächen 9 bis 11 an der Fläche der Dekorationsfolie 1 beträgt weniger als 20 %, vorzugsweise zwischen 1% und 10%.

Bekannt sind optisch variable Beugungsmuster in Form eines Hologramms und in KINEGRAM - Technik gemäss EP 0 105 099 B1. Die Beugungsmuster weisen oft spiegelnde Flächen auf. Als zusätzliches Sicherheitsmerkmal weisen diese anstelle spiegelnder Flächen Teilflächen mit dem Muster der Gruppen 30 und des Hintergrundfelds 31 auf.

Die Gruppen 30 sind in der Ausführung nach Figur 7 in Textbändem 33 aufgereiht. Zur weiteren Verzierung sind die Textbänder 33 mit schmalen Linien 34 oder Doppellinien 35 mit Linienbreiten im Bereich von 0,05 mm oder weniger eingefasst. Beispielsweise sind die Flächen der Linien 34 oder der Doppellinien 35 mit Beugungsgittern belegt und in der KINEGRAM - Technik ausgeführt. Die Kombination dieser beiden unterschiedlichen Techniken ergibt auf einer Marke 27 ein von blossem Auge sichtbares, optisch variables Guilloche - Muster 36 mit einem Durchmesser in der Grössenordnung Zentimeter und mit einer erst bei der Betrachtung durch die Lupe 32 erkennbaren Information. Diese Marke 27 eignet sich wegen des Spiegeleffekts als Kopierschutz und ist als Echtheitsmerkmal auf das Substrat 24 (Dokument, Ausweis, Karte usw.) geklebt.

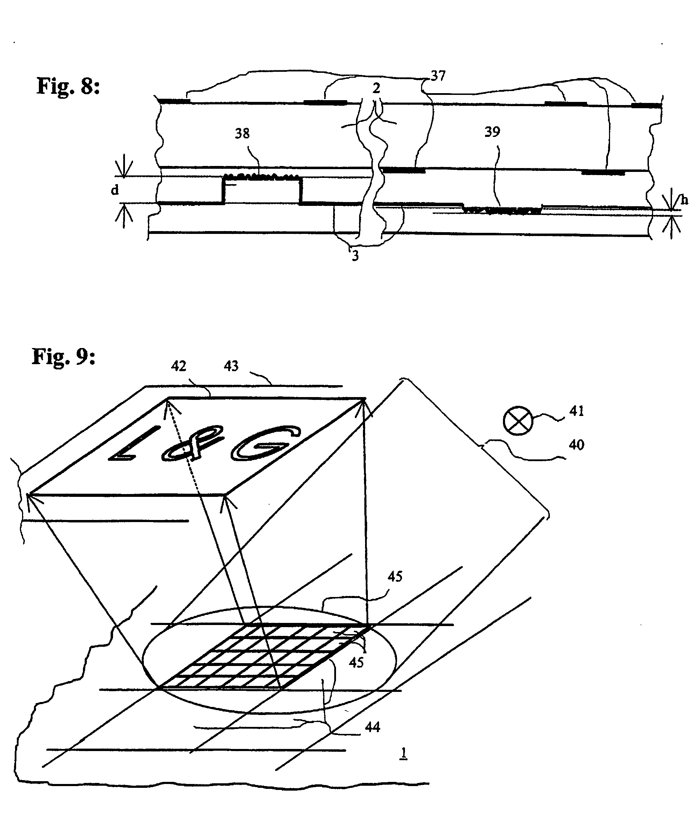

Die Figur 8 zeigt Ausführungen der Dekorationsfolie 1 mit zusätzlich auf der Basisfolie 2 aufgedruckten Indicia 37 (Text, Bilder, Embleme usw.). Die eine Ausführung, links, weist die Indicia 37 nur auf der von der Reflexionsschicht 3 abgewandten, äusseren Seite der Basisfolie 2 auf, die andere Ausführung, rechts, Indicia 37 auf beiden Seiten der Basisfolie 2. Das Bedrucken der Basisfolie 2 auf wenigstens einer der beiden Seiten mit Informationen oder Hinweisen kann für Herkunftsangaben oder zur künstlerischen Gestaltung der Dekorationsfolie 1 beitragen. Die Indicia 37 sind vor Abrieb geschützt, wenn sie auf der inneren, der Reflexionsschicht 3 zugewandten Seite der Basisfolie 2 aufgedruckt sind.

Die in der Figur 8 gezeigte Struktur der Dekorationsfolie 1 benötigt zum Abformen eine Matrize 15 (Figur 3), deren Stempelflächen 20 (Figur 3) bis 22 (Figur 3) und/oder Matrizenfläche 23 (Figur 3) anstelle einer spiegelglatten Oberfläche eine mikroskopisch feine Reliefstruktur 38 bzw. 39 aufweisen, die sich beim Abformen auf die Elementflächen 9 bis 11 bzw. auf die Hintergrundfläche 31 überträgt. Als Reliefstruktur 31 sind isotrope oder anisotrope Mattstrukturen oder eine aus der CH-PS 653 782 bekannte Kinoform - Struktur verwendbar. Die Elementflächen 9 bis 11 (Figur 1) weisen wenigstens innerhalb einer Gruppe 30 (Figur 6) die gleiche Reliefstruktur 38 auf. Die benachbarten Gruppen 30 können sich durch verschieden ausgerichtete Reliefstrukturen 38 unterscheiden, so dass in der einen Richtung eine erste Mikromarkierung zu erkennen ist und nach Drehen der Dekorationsfolie 1 in einer anderen Richtung eine zweite Mikromarkierung zu lesen ist. Die Höhenunterschiede innerhalb der Reliefstruktur 38 bzw. 39 liegen im Bereich 10 nm bis 5000 nm.

Die isotrope Mattstrukturen streuen das einfallende Licht unabhängig von dessen Enfallsrichtung gleichmässig in den ganzen Halbraum über der Mattstruktur (= isotrop). Eine Fläche der Dekorationsfolie 1, die mit der isotropen Mattstruktur belegt ist, weist einen matten, lichtschwachen Glanz auf. Die anisotrope Mattstruktur weist in einer Ausrichtung zum einfallenden Licht ein mattes Aussehen auf; in einer anderen Ausrichtung, nachdem die Mattstruktur um eine zur Ebene der Dekorationsfolie 1 senkrechte Achse gedreht wurde, glänzt die Mattstruktur, jedoch ist dieser Glanz deutlich schwächer als die Lichtintensität der angrenzenden, spiegelnden Fläche. Die Elementflächen 9 einer ganzen Gruppe 30 weisen die gleiche Mattstruktur auf. Die benachbarte Gruppen 30 können sich durch verschieden ausgerichtete anisotrope Mattstrukturen unterscheiden. Dadurch ist in der einen Richtung die erste Mikromarkierung mit einem hohen Kontrast und die zweite Mikromarkierung mit einem niederen Kontrast gegen das Hintergrundfeld 31 (Figur 6) zu erkennen und in der anderen Richtung weist die erste Mikromarkierung den niederen Kontrast und die zweite Mikromarkierung den hohen Kontrast auf.

Die Matrizenfläche 23 oder die Stempelflächen 20 bis 22 können auch eine versteckte Information enthalten und werden zu diesem Zweck mit einer besonderen Reliefstruktur 39 versehen und in der Kombination mit der Spiegelfläche für die Stempelflächen 20 bis 22 bzw. für die Matrizenfläche 23 für die Abformung der Struktur der Dekorationsfolie 1 verwendet. Diese in die Basisfolie 2 abgeformte Reliefstruktur streut einfallendes inkohärentes Licht bei normaler Beleuchtung ähnlich wie eine Mattstruktur, so dass mit der Lupe 32 (Figur 7) betrachtet die Elementflächen 9 bis 11 entweder als spiegelnde Flächen im metallisch matten Hintergrundfeld 31 oder als matt schimmernde metallische Flächen im spiegelnden Hintergrundfeld 31 erscheinen.

Die Figur 9 zeigt einen Ausschnitt der Dekorationsfolie 1 mit der besonderen Reliefstruktur 39 (Figur 8). Bei der Beleuchtung mit einem parallelen kohärenten Lichtbündel 40 einer Laserdiode oder eines Lasers 41 lenkt die besondere Reliefstruktur 39 das einfallende, kohärente Licht derart ab, dass das abgelenkte Licht eine weitere versteckte Information, hier das Logo 42 mit den Buchstaben "L & G" auf einem über der Dekorationsfolie 1 angeordneten Schirm 43 projiziert. Ein Vertreter dieser besonderen Reliefstrukturen 39 ist das Kinoform, ein mittels eines Computers generiertes Hologramm. Die versteckte Information wird im kohärenten Licht rekonstruiert, unabhängig davon welcher Ort des Kinoforms beleuchtet ist oder wie gross die beleuchtete Fläche ist, jedoch verschlechtert sich die Bildqualität der projizierten Information je kleiner die beleuchtete Fläche ist. Dieses Verhalten ist auch bei Fourier - Hologrammen bekannt, bei denen in jedem Flächenelement die gesamte Bildinformation des Hologramms vorhanden ist. In der realen Ausgestaltung des Kinoforms wiederholt sich das mittels Computer berechnete Reliefprofil auf den Elementflächen 9 (Figur 5) bis 11 (Figur 5) oder auf dem Hintergrundfeld 31 (Figur 6) in einem regelmässigen Raster, dessen Rasterfelder 44 typische Abmessungen im Bereich von 0,5 mm bis 10 mm aufweisen, währenddem Details des berechneten Reliefprofils das Rasterfeld in Rasterelemente 45 unterteilen, deren typische Abmessungen im Bereich von Mikrometern liegen, vorzugsweise im Bereich 0,5 µm bis 5 µm. Zur Beleuchtung wird die Laserlichtquelle 41 eingesetzt, deren paralleles Lichtbündel 40 einen Lichtfleck 45 auf der Dekorationsfolie 1 erzeugt, der für eine gute Bildqualität mindestens ein Rasterfeld 44 vollständig ausleuchtet.

Weisen die Elementflächen 9 bis 11 der Mikromarkierung die Kinoform - Struktur auf, so kann die versteckte Information bei der Beleuchtung der Dekorationsfolie 1 mit dem Laserstrahl auf dem Schirm nicht perfekt rekonstruiert werden, wenn der Flächenanteil aller Mikromarkierungen weniger als 5% der Fläche der Dekorationsfolie 1 einnimmt. Der grosse Spiegelanteil des Hintergrundfelds 31 führt auf dem Schirm 43 zu einem hellen Spiegelreflex, in dem die versteckte Information nur schwach erkennbar ist. Zudem wirkt die Mikromarkierung wie eine Maske, die dem Kinoform überlagert ist. An dieser Maske treten Beugungseffekte auf, dessen Muster dem rekonstruierten Logo 42 überlagert ist und es zusätzlich verschmiert.

Mit Vorteil wird daher eine Ausführung der Dekorationsfolie 1 gewählt, bei welcher das ganze Hintergrundfeld 31 mit den Rasterfeldern 44 des Kinoforms belegt ist und die Elementflächen 9 bis 11 der Mikromarkierungen die Spiegelstruktur aufweisen. Der Beobachter sieht von blossem Auge eine leicht matt glänzende Dekorationsfolie 1, die von einer blanken Folie nicht zu unterscheiden ist. Eine Inspektion mit der Lupe 32 (Figur 7) bei schiefer Beleuchtung enthüllt die Mikromarkierunge. Die versteckte Information ist erst auf dem Schirm 43 sichtbar, wenn die Dekorationsfolie 1 mit kohärentem Licht beleuchtet wird.

## Patentansprüche

1. Dekorationsfolie (1) aus wenigstens einer Basisfolie (2) und einer einseitig auf der Basisfolie (2) angeordneten Reflexionsschicht (3) mit einer in die Basisfolie (2) abgeformten Struktur,
**dadurch gekennzeichnet,**
**dass** die durch Abformen erhaltene Struktur in Gruppen (30) angeordnete Vertiefungen und/oder Erhöhungen aufweist, wobei die Vertiefungen und/oder Erhöhungen als Zylinder, Prismen, Kegel-, Pyramidenstümpfe oder mit einem im wesentlichen rechteckigen oder trapezförmigen Querschnitt geformt sind und als Deckflächen Elementflächen (9; 10, 11) aufweisen, wobei die Abmessungen (A) der Elementflächen (9; 10; 11) im Bereich zwischen 250 nm und 300 µm liegen,
**dass** sich eine von der Gruppe (30) eingenommene Gruppenfläche (19) aus den Elementflächen (9; 10; 11) und aus Restflächen (13) zusammensetzt und die Gruppenfläche (19) eine Breite von 30 µm bis 300 µm aufweist,
**dass** die Elementflächen (9; 10; 11) einer Gruppe (30) in einer um die Distanz (d) verschobenen Parallelebene (8) zu einer Abformfläche (7) und die Restflächen (13) in der Ebene der Abformfläche (7) liegen und
**dass** die Gruppen (30) durch in der Ebene der Abformfläche (7) liegende Bereiche eines Hintergrundfeldes (31) getrennt sind.

2. Dekorationsfolie (1) nach Anspruch 1, **dadurch gekennzeichnet, dass** eine Schutzschicht (4) eine eine Reflexionsschicht (3) aufweisende strukturierte Seite der Basisfolie (2) so abdeckt, dass die Vertiefungen der Struktur in der Basisfolie (2) verfüllt sind und die Reflexionsschicht (3) zwischen der Basisfolie (2) und der Schutzschicht (4) eingeschlossen ist

3. Dekorationsfolie (1) nach Anspruch 1 oder 2, **dadurch gekennzeichnet, dass** die Elementflächen (9; 10; 11) wenigstens einer Gruppe (30) durch Konturen von Buchstaben und/oder Zeichen begrenzt sind und in der Gruppenfläche (19) eine nur mit einer Lupe (32) erkennbare Mikromarkierung darstellen.

4. Dekorationsfolie (1) nach Anspruch 3, **dadurch gekennzeichnet, dass** die Mikromarkierungen in Textbändern (33) angeordnet sind und die Textbänder (33) ein Guilloche - Muster (36) bilden.

5. Dekorationsfolie (1) nach Anspruch 1 oder 2, **dadurch gekennzeichnet, dass** die Gruppen (30) im Hintergrundfeld (31) in einem regelmässig sich wiederholenden Muster angeordnet sind.

6. Dekorationsfolie (1) nach Anspruch 5, **dadurch gekennzeichnet, dass** spiegelnde Teilflächen eines optisch variablen Beugungsmusters das Muster der Gruppen (30) im Hintergrundfeld (31) aufweisen.

7. Dekorationsfolie (1) nach Anspruch 1, **dadurch gekennzeichnet, dass** die Distanz (d) zwischen jeder der Parallelebenen (8) und der Ebene der Abformfläche (7) einen Wert im Bereich von 0,05 µm bis 10 µm aufweist.

8. Dekorationsfolie (1) nach einem der Ansprüche 1 bis 7, **dadurch gekennzeichnet, dass** die Elementflächen (9; 10; 11) wenigstens einer Gruppe (30) als Spiegelflächen ausgebildet sind.

9. Dekorationsfolie (1) nach einem der Ansprüche 1 bis 7, **dadurch gekennzeichnet, dass** die Elementflächen (9; 10; 11) wenigstens einer Gruppe (30) eine mikroskopisch feine Reliefstruktur (38) aufweisen, wobei eine mittlere Höhe h der Reliefstruktur (38) die Lage der Parallelebene (8) bestimmt.

10. Dekorationsfolie (1) nach Anspruch 9, **dadurch gekennzeichnet, dass** sich die Reliefstrukturen (38) bei wenigstens zwei Gruppen (30) durch eine azimutalen Vorzugsrichtung der Reliefstrukturen (38) unterscheiden.

11. Dekorationsfolie (1) nach Anspruch 9, **dadurch gekennzeichnet, dass** die Reliefstruktur (38) der Elementflächen (9; 10; 11) bei wenigstens einer Gruppe (30) eine isotrope Mattstruktur ist.

12. Dekorationsfolie (1) nach Anspruch 9 oder 10, **dadurch gekennzeichnet, dass** die Reliefstrukturen (38) bei wenigstens zwei Gruppen (30) anisotrope Mattstrukturen sind und dass sich die azimutale Orientierung der anisotropen Mattstruktur der einen Gruppe (30) von der azimutalen Orientierung der anisotropen Mattstruktur der anderen Gruppe (30) unterscheidet.

13. Dekorationsfolie (1) nach einem der Ansprüche 8 bis 12, **dadurch gekennzeichnet, dass** das die Elementflächen (9; 10; 11) umgebende Hintergrundfeld (31) in Rasterflächen (44) eingeteilt ist und dass wenigstens eines der Rasterfelder (44) die Reliefstruktur (39) eines Kinoforms aufweist.

14. Dekorationsfolie (1) nach einem der Ansprüche 8 bis 12, **dadurch gekennzeichnet, dass** das die Elementflächen (9; 10; 11) umgebende Hintergrundfeld (31) ein Spiegel ist.

15. Dekorationsfolie (1) nach Anspruch 2, **dadurch gekennzeichnet, dass** die Reflexionsschicht (3) aus einem der Metalle Al, Ag, Au, Cr, Cu, Pd, Ti oder einem transparenten Dielektrikum besteht.

16. Dekorationsfolie (1) nach Anspruch 1, **dadurch gekennzeichnet, dass** die Basisfolie (2) ein aus wenigstens einer Basisschicht (5) und einer Abformschicht (6) aufgebautes Laminat (12) ist und dass die Abformschicht (6) zwischen der Reflexionsschicht (3) und der Basisschicht (5) angeordnet ist.

17. Dekorationsfolie (1) nach Anspruch 1 oder 16, **dadurch gekennzeichnet, dass** die Basisfolie (2) transparent ist.

18. Dekorationsfolie (1) nach Anspruch 1, **dadurch gekennzeichnet, dass** die Basisfolie (2) auf wenigstens einer Seite drucktechnisch aufgebrachte Indicia (37) aufweist.

19. Dekorationsfolie (1) nach Anspruch 2, **dadurch gekennzeichnet, dass** die Basisfolie (2) ein aus wenigstens einer Basisschicht (5) und einer Abformschicht (6) aufgebautes Laminat (12) ist, dass die Abformschicht (6) zwischen der Reflexionsschicht (3) und der Basisschicht (5) angeordnet ist und dass die Basisschicht (5) ein Papier ist und die Schutzschicht (4) transparent ist.

20. Dekorationsfolie (1) nach Anspruch 2, **dadurch gekennzeichnet, dass** die Schutzschicht (4) oder eine auf der von der Reflexionsschicht (3) abgewandten Seite der Schutzschicht (4) angeordnete Klebeschicht (25) zum Verbinden mit einem Substrat (24) eingerichtet ist.

21. Dekorationsfolie (1) nach Anspruch 20, **dadurch gekennzeichnet, dass** die Basisfolie (2) auf der von der Reflexionsschicht (3) abgewandten Seite über eine Trennschicht (29) mit einem Transferband (28) verbunden ist.

22. Dokument mit einer Dekorationsfolie (1) nach einem der Ansprüche 20 und 21, **dadurch gekennzeichnet, dass** die Dekorationsfolie (1) einen Teil des Substrats (24) bedeckt und mit diesem mittels der klebenden Schicht (4; 25) verbunden ist.

## Claims

1. Decorative film (1) comprising at least one base film (2) and a reflective layer (3) arranged on one side of the base film (2) and having a structure moulded into the base film (2), **characterized**
**in that** the structure obtained by moulding comprises depressions and/or elevations arranged in groups (30), the depressions and/or elevations being moulded as cylinders, prisms, truncated cones, truncated pyramids or with a substantially rectangular or trapezoidal cross section and, as covering surfaces, having elementary surfaces (9; 10; 11), the dimensions (A) of the elementary surfaces (9; 10; 11) lying in the range between 250 nm and 300 µm,
**in that** a group area (19) occupied by the group (30) is composed of the elementary surfaces (9; 10; 11) and of remaining surfaces (13), and the group area (19) has a width of 30 µm to 300 µm,
**in that** the elementary surfaces (9; 10; 11) of a group (30) lie in a parallel plane (8) shifted by the distance (d) in relation to a moulding surface (7), and the remaining surfaces (13) lie in the plane of the moulding surface (7), and
**in that** the groups (30) are separated by areas of a background field (31) lying in the plane of the moulding surface (7).

2. Decorative film (1) according to Claim 1, **characterized in that** a protective layer (4) covers a structured side of the base film (2) having a reflective layer (3), in such a way that the depressions in the structure in the base film (2) are filled and the reflective layer (3) is enclosed between the base film (2) and the protective layer (4).

3. Decorative film (1) according to Claim 1 or 2, **characterized in that** the elementary surfaces (9; 10; 11) of at least one group (30) are bounded by contours of letters and/or symbols, and, in the group area (19), represent a micromarking which can be detected only with a magnifying glass (32).

4. Decorative film (1) according to Claim 3, **characterized in that** the micromarkings are arranged in strips of text (33), and the strips of text (33) form a guilloche pattern (36).

5. Decorative film, (1) according to Claim 1 or 2, **characterized in that** the groups (30) in the background field (31) are arranged in a pattern which repeats regularly.

6. Decorative film (1) according to Claim 5, **characterized in that** reflective subareas of an optically variable defraction pattern have the pattern of the groups (30) in the background field (31).

7. Decorative film (1) according to Claim 1, **characterized in that** the distance (d) between each of the parallel planes (8) and the plane of the moulding surface (7) has a value in the range from 0.05 µm to 10 µm.

8. Decorative film (1) according to one of Claims 1 to 7, **characterized in that** the elementary surfaces (9; 10; 11) of at least one group (30) are designed as reflective surfaces.

9. Decorative film (1) according to one of Claims 1 to 7, **characterized in that** the elementary surfaces (9; 10; 11) of at least one group (30) have a microscopically fine relief structure (38), an average height h of the relief structure (38) determining the position of the parallel plane (8).

10. Decorative film (1) according to Claim 9, **characterized in that** the relief structures (38) in at least two groups (30) are distinguished by a preferred azimuthal direction of the relief structures (38).

11. Decorative film (1) according to Claim 9, **characterized in that** the relief structure (38) of the elementary surfaces (9; 10; 11) in at least one group (30) is an isotropic matt structure.

12. Decorative film (1) according to Claim 9 or 10, **characterized in that** the relief structures (38) in at least two groups (30) are anisotropic matt structures, and **in that** the azimuthal orientation of the anisotropic matt structure of one group (30) differs from the azimuthal orientation of the anisotropic matt structure of the other group (30).

13. Decorative film (1) according to one of Claims 8 to 12, **characterized in that** the background field (31) surrounding the elementary surfaces (9; 10; 11) is divided up into gridded areas (44), and **in that** at least one of the gridded fields (44) has the relief structure (39) of a kinoform.

14. Decorative film (1) according to one of Claims 8 to 12, **characterized in that** the background field (31) surrounding the elementary surfaces (9; 10; 11) is a mirror.

15. Decorative film (1) according to Claim 2, **characterized in that** the reflective layer (3) consists of one of the metals Al, Ag, Au, Cr, Cu, Pd, Ti or a transparent dielectric.

16. Decorative film (1) according to Claim 1, **characterized in that** the base film (2) is a laminate (12) constructed from at least one base layer (5) and a moulded layer (6), and **in that** the moulded layer (6) is arranged between the reflective layer (3) and the base layer (5).

17. Decorative film (1) according to Claim 1 or 16, **characterized in that** the base film (2) is transparent.

18. Decorative film (1) according to Claim 1, **characterized in that** the base film (2) has indicia (37) applied to at least one side by printing.

19. Decorative film (1) according to Claim 2, **characterized in that** the base film (2) is a laminate (12) constructed from at least one base layer (5) and a moulded layer (6), **in that** the moulded layer (6) is arranged between the reflective layer (3) and the base layer (5), and **in that** the base layer (5) is a paper and the protective layer (4) is transparent.

20. Decorative film (1) according to Claim 2, **characterized in that** the protective layer (4) or an adhesive layer (25) arranged on the side of the protective layer (4) that faces away from the reflective layer (3) is set up to be connected to a substrate (24).

21. Decorative film (1) according to Claim 20, **characterized in that** on the side facing away from the reflective layer (3), the base film (2) is joined to a transfer tape (28) via a release layer (29).

22. Document with a decorative film (1) as claimed in one of Claims 20 and 21, **characterized in that** the decorative film (1) covers part of the substrate (24) and is joined to the latter by means of the adhesive layer (4; 25).

## Revendications

1. Feuille décorative (1) constituée au moins d'une feuille de base (2) et d'une couche réflectrice (3) placée unilatéralement sur la feuille de base (2) avec une structure moulée dans la feuille de base (2), **caractérisée en ce que**, la structure en groupes (30) obtenue par le moulage présente des creux et/ou des reliefs, les creux et/ou les reliefs étant formés comme des cylindres, des prismes, des cônes tronqués, des pyramides tronquées ou ayant une coupe transversale essentiellement rectangulaire ou trapézoïdale et présentent les surfaces d'élément comme des surfaces de recouvrement (9, 10, 11), dans lesquelles les tailles (A) des surfaces d'élément (9, 10, 11) dans la zone sont entre 250 nm et 300 µm, qu'une surface de groupe (19) prise par le groupe (30) est composée de surfaces d'élément (9, 10, 11) et de surfaces résiduelles (13) et les surfaces de groupe (19) présentent une largeur allant de 30 µm à 300 µm, que les surfaces d'élément (9, 10, 11) d'un groupe (30) à un niveau parallèle (8) déplacé sur la distance (d) vers une surface de moulage (7) et les surfaces résiduelles (13) sont au niveau de la surface de moulage (7) et que les groupes (30) sont séparés par la zone du panneau du fond (31) se trouvant au niveau de la surface de moulage (7).

2. Feuille décorative (1) selon la revendication 1, **caractérisée en ce que**, une couche protectrice (4) couvre un côté structuré de la feuille de base (2), présentant une couche réflectrice (3), pour que les creux de la structure dans la feuille de base (2) soient remblayés et que la couche réflectrice (3) soit contenue entre la feuille de base (2) et la couche protectrice (4).

3. Feuille décorative (1) selon la revendication 1 ou 2, **caractérisée en ce que** les surfaces d'élément (9, 10, 11) d'au moins.un groupe (30) sont limitées par les contours des caractères et/ou des signes, et représentent dans la surface de groupe (19) un micro-marquage reconnaissable uniquement avec une loupe grossissante (32).

4. Feuille décorative (1) selon la revendication 3, **caractérisée en ce que** les micro-marquages sont placés en bande de texte (33) et les bandes de texte (33) forment un modèle d'ornement en guilloche (36).

5. Feuille décorative (1) selon la revendication 1 ou 2, **caractérisée en ce que**, les groupes (30) du panneau du fond (31) sont placés dans un modèle se répétant régulièrement.

6. Feuille décorative (1) selon la revendication 5, **caractérisée en ce que** les surfaces partielles spéculaires d'un modèle de diffraction variable optique présentent le modèle de groupes (30) du panneau du fond (31).

7. Feuille décorative (1) selon la revendication 1, **caractérisée en ce que** la distance (d) entre chacun des niveaux parallèles (8) et le niveau de la surface de moulage (7) présente une valeur dans la zone allant de 0,05 µm à 10 µm.

8. Feuille décorative (1) selon l'une quelconque des revendications 1 à 7, **caractérisée en ce que** les surfaces d'élément (9, 10, 11) d'au moins un groupe (30) sont formées comme les surfaces du miroir.

9. Feuille décorative (1) selon l'une quelconque des revendications 1 à 7, **caractérisée en ce que** les surfaces d'élément (9, 10, 11) d'au moins un groupe (30) présentent une structure en relief (38) fine microscopique, dans laquelle une hauteur moyenne h de la structure en relief (38) détermine la situation du niveau parallèle (8).

10. Feuille décorative (1) selon la revendication 9, **caractérisée en ce que** les structures en relief (38) dans au moins deux groupes (30) se différencient par une orientation préférentielle azimutale des structures en relief (38).

11. Feuille décorative (1) selon la revendication 9, **caractérisée en ce que** la structure en relief (38) des surfaces d'élément (9, 10, 11) d'au moins un groupe (30) est une structure mate isotrope.

12. Feuille décorative (1) selon la revendication 9 ou 10, **caractérisée en ce que** les structures en relief (38) dans au moins deux groupes (30) sont des structures mates anisotropes et que l'orientation azimutale de la structure mate anisotrope d'un groupe (30) se distingue de l'orientation azimutale de la structure mate anisotrope d'un autre groupe (30).

13. Feuille décorative (1) selon l'une quelconque des revendications 8 à 12, **caractérisée en ce que** le panneau du fond (31) autour des surfaces d'élément. (9, 10, 11) est divisé en aires de trames (44) et qu'au moins l'une des zones de trame (44) présente la structure en relief (39) d'un Kinoform.

14. Feuille décorative (1) selon l'une quelconque des revendications 8 à 12, **caractérisée en ce que** le panneau du fond (31) environnant les surfaces d'élément (9, 10, 11) est un miroir.

15. Feuille décorative (1) selon la revendication 2, **caractérisée en ce que** la couche réflectrice (3) consiste en l'un des métaux suivants Al, Ag, Au, Cr, Cu, Pd, Tl ou en un diélectrique transparent.

16. Feuille décorative (1) selon la revendication 1, **caractérisée en ce que** la feuille de base (2) est un aggloméré laminé (12) constitué d'au moins une couche de base (5) et d'une couche de moulage (6) et que les couche de moulage (6) sont placées entre la couche réflectrice (3) et la couche de base (5).

17. Feuille décorative (1) selon la revendication 1 ou 16, **caractérisée en ce que** la feuille de base (2) est transparente.

18. Feuille décorative (1) selon la revendication 1, **caractérisée en ce que** la feuille de base (2) présente sur au moins un côté les indices (37) apportés par technique d'impression.

19. Feuille décorative (1) selon la revendication 2, **caractérisée en ce que** la feuille de base (2) est un aggloméré laminé (12) constitué d'au moins une couche de base (5) et d'une couche de moulage (5), que la couche de moulage (6) est placée entre la couche réflectrice (3) et la couche de base (5), et que la couche de base (5) est un papier et la couche protectrice (4) transparente.

20. Feuille décorative (1) selon la revendication 2, **caractérisée en ce que** la couche protectrice (4) ou une couche adhésive (25) pour la liaison qui est placée sur un côté de la couche protectrice (4) détourné par la couche réflectrice (3) est installée avec un substrat (24).

21. Feuille décorative (1) selon la revendication 20, **caractérisée en ce que** la feuille de base (2) sur le côté détourné par la couche réflectrice (3) est reliée à la bande de transfert (28) sur une couche de séparation (29).

22. Document avec une feuille décorative (1) selon l'une quelconque des revendications 20 et 21, **caractérisé en ce que** la feuille décorative (1) couvre une partie du substrat (24) et est reliée à ce dernier au moyen de la couche adhésive (4, 25).
